# EUROPEAN PATENT APPLICATION

(11) **EP 4 738 574 A1**
(43) Date of publication of application: **06.05.2026**
(21) Application number: 24838646.8
(22) Date of filing: 02.07.2024
(51) Int. Cl.: H01M 50/244, H01M 50/35, H01M 10/613

(54) **BATTERY AND ELECTRIC DEVICE**

(30) Priority: 11.07.2023 CN 202321806441 U
(71) Applicant: Contemporary Amperex Technology Co., Limited, Ningde, Fujian 352100 (CN)
(72) Inventor: LI, Jingjing, Ningde, Fujian 352100 (CN); CHEN, Xiaobo, Ningde, Fujian 352100 (CN); HU, Lu, Ningde, Fujian 352100 (CN)
(74) Representative: Ziebig Hengelhaupt Intellectual Property Attorneys Patentanwaltskanzlei PartGmbB
(86) International application number: PCT/CN2024/103065
(87) International publication number: WO 2025/011391

(57) **Abstract**

The present application discloses a battery and an electric device. The battery includes: a battery cell (20) provided with a first pressure relief mechanism (21); a housing (10) provided with an inner cavity (11); a first separator plate (30) mounted in the housing (10) to separate the inner cavity (11) into a first chamber (111) and a second chamber (112), where the battery cell (20) is mounted in the first chamber (111), the first separator plate (30) is provided with a through hole (31), the first chamber (111) is communicated with the second chamber (112) through the through hole (31), and the first pressure relief mechanism (21) is communicated with the through hole (31) to allow an ejected substance ejected from the battery cell (20) to flow into the second chamber (112); and a cooling device mounted in the second chamber (112), where the cooling device is configured to cool the ejected substance flowing into the second chamber (112). Application of the technical solution of the present application solves the problems that high-temperature substances ejected during thermal runaway of current batteries not only have the risk of being ignited, but also generate continuous thermal shock and radiation to the periphery of the battery, and great thermal harm is caused.

## Description

The present application claims priority to Chinese Patent Application No. 202321806441.1, filed with the China National Intellectual Property Administration on July 11, 2023, entitled "BATTERY AND ELECTRIC DEVICE", the entire content of which is incorporated herein by reference.

### TECHNICAL FIELD

The present application relates to the technical field of new energy batteries, and in particular, to a battery and an electric device.

### BACKGROUND

A battery is designed with an avoidance cavity and an explosion-proof valve. When the battery experiences thermal runaway, ejected substances resulting from thermal runaway of the battery accumulate in the avoidance cavity, and after certain pressure is reached, the explosion-proof valve is opened, and the ejected substances are ejected from the explosion-proof valve. The ejected substances resulting from thermal runaway of the battery generally contain a large amount of high-temperature solid particles and combustible gas, which have the risk of being ignited, and generate continuous thermal shock and radiation to the periphery of the battery, and great thermal harm is caused.

### SUMMARY

An objective of embodiments of the present application is to provide a battery and an electric device, comprising but not limited to solving the problems that high-temperature substances ejected during thermal runaway of current batteries not only have the risk of being ignited, but also generate continuous thermal shock and radiation to the periphery of the battery, and great thermal harm is caused.

An embodiment of the present application employs technical solutions below.

According to a first aspect of the present application, a battery is provided, comprising:
a battery cell provided with a first pressure relief mechanism;
a housing provided with an inner cavity;
a first separator plate mounted in the housing to separate the inner cavity into a first chamber and a second chamber, wherein the battery cell is mounted in the first chamber, the first separator plate is provided with a through hole, the first chamber is communicated with the second chamber through the through hole, and the first pressure relief mechanism is disposed opposite to the through hole to allow an ejected substance ejected from the battery cell to flow into the second chamber; and
a cooling device mounted in the second chamber, wherein the cooling device is configured to cool the ejected substance flowing into the second chamber.

In the battery provided in this embodiment of the present application, the housing is separated into the first chamber and the second chamber by using the first separator plate, the first chamber is configured to mount battery cells for assembly to form a key component part of the battery, and the second chamber is formed as an avoidance cavity configured to accommodate the ejected substance ejected from the battery cell when the battery experiences thermal runaway. Moreover, the cooling device is disposed in the second chamber, and when the ejected substance flows into the second chamber, the cooling device can exchange heat with the ejected substance, thereby cooling the ejected substance to make the temperature of the ejected substance lower than an ignition temperature. In this way, even if the ejected substance is discharged from the second chamber to the outside to be in contact with the air, the ejected substance will not be ignited, thereby reducing continuous thermal impact and radiation generated to the periphery of the battery by the ejected substance generated when the battery experiences thermal runaway, and greatly reducing harm of the high-temperature ejected substance to the battery.

In some embodiments, the cooling device comprises a liquid cooling plate, and the liquid cooling plate is mounted in the second chamber; and/or the first separator plate is disposed as the liquid cooling plate. A cooling liquid flowing in the liquid cooling plate is used to cool the high-temperature ejected substance generated by the battery cell during thermal runaway, so that the ejected substance is cooled, and the temperature of the ejected substance is reduced to below the ignition temperature.

In some embodiments, the cooling device further comprises a plurality of second separator plates, each of the second separator plates is mounted in the second chamber, two adjacent second separator plates are spaced apart to form a partitioned space, and two adjacent partitioned spaces are communicated with each other. In some embodiments, one end of each of the second separator plates abuts against the liquid cooling plate, and/or the other end of each of the second separator plates abuts against an inner wall of the housing. In some embodiments, a plurality of partitioned spaces are sequentially communicated head to tail to form a flow channel. The plurality of second separator plates are used to assist the liquid cooling plate in absorbing heat of the ejected substance, thereby greatly improving efficiency of exchanging heat with the ejected substance by the liquid cooling plate, and more quickly cooling the ejected substance, so that the temperature of the ejected substance is quickly reduced to below the ignition temperature, thereby reducing thermal harm of the ejected substance to the battery.

In some embodiments, the cooling device further comprises a liquid cooling tube, the liquid cooling tube has a first end, a second end, and a cooling tube section connected between the first end and the second end, the cooling tube section is disposed to extend along a flow path of the flow channel, and the first end and the second end respectively pass through the second chamber. A cooling pipe is used to take away the heat of the ejected substance to cool the ejected substance, so that the temperature of the ejected substance is quickly reduced to below the ignition temperature.

In some embodiments, the second separator plate is a plate made of metal. A metal material has good heat-conducting performance, and can quickly exchange heat with the high-temperature ejected substance in contact with the metal material, thereby absorbing the heat and transferring the heat to the liquid cooling plate.

In some embodiments, the cooling device further comprises an endothermic phase-change material, and the endothermic phase-change material is disposed on the second separator plate. Efficiency of heat exchange between the endothermic phase-change material and the ejected substance in contact with each other is higher than efficiency of heat exchange between the ejected substance and the second separator plate in contact with each other, so that the heat of the high-temperature ejected substance can be quickly absorbed, and the ejected substance is cooled.

In the battery according to this embodiment of the present application, the liquid cooling tube and the endothermic phase-change material simultaneously exchange heat with the high-temperature ejected substance, so that the high-temperature ejected substance can be cooled more quickly, and the temperature of the ejected substance can be quickly reduced to below the ignition temperature.

In some embodiments, the cooling device further comprises a liquid pump, the liquid pump is configured to pump a cooling liquid to the liquid cooling plate, a pressure sensor is mounted in the second chamber, and the pressure sensor is electrically connected to the liquid pump. When the high-temperature ejected substance flows into the second chamber, the pressure sensor detects that pressure in the second chamber increases, then the pressure sensor sends a monitoring signal indicating that the pressure in the second chamber increases to the liquid pump, and the liquid pump increases, based on the monitoring signal sent by the pressure sensor, the flow rate and the flow velocity of the cooling liquid delivered to the liquid cooling plate, thereby improving efficiency of taking away heat transferred to the liquid cooling plate, so that the high-temperature ejected substance in the second chamber can be quickly cooled.

In some embodiments, the cooling device further comprises a liquid pump, the liquid pump is configured to pump a cooling liquid to the liquid cooling plate, a temperature sensor is mounted in the second chamber, and the temperature sensor is electrically connected to the liquid pump. When the high-temperature ejected substance flows into the second chamber, the temperature sensor detects that the temperature in the second chamber increases, then the temperature sensor sends a monitoring signal indicating that the temperature in the second chamber increases to the liquid pump, and the liquid pump increases, based on the monitoring signal sent by the temperature sensor, the flow rate and the flow velocity of the cooling liquid delivered to the liquid cooling plate, thereby improving efficiency of taking away heat transferred to the liquid cooling plate, so that the high-temperature ejected substance in the second chamber can be quickly cooled.

In some other embodiments, the cooling device further comprises a liquid pump, the liquid pump is configured to pump a cooling liquid to the liquid cooling plate, a pressure sensor and a temperature sensor are mounted in the second chamber, and both the pressure sensor and the temperature sensor are electrically connected to the liquid pump. When the high-temperature ejected substance flows into the second chamber, the pressure sensor and the temperature sensor respectively detect that pressure and the temperature in the second chamber increase, and then both the pressure sensor and the temperature sensor send monitoring signals to the liquid pump, and the liquid pump increases the flow rate and the flow velocity of the cooling liquid delivered to the liquid cooling plate, regardless of whether the liquid pump receives a pressure signal or a temperature signal, or the liquid pump receives both the pressure signal and the temperature, thereby improving efficiency of taking away heat transferred to the liquid cooling plate, so that the high-temperature ejected substance in the second chamber can be quickly cooled.

In some embodiments, the cooling device comprises an endothermic phase-change material, and the endothermic phase-change material is disposed in the second chamber. Efficiency of heat exchange between the endothermic phase-change material and the ejected substance in contact with each other is higher than efficiency of heat exchange between the ejected substance and the second separator plate in contact with each other, so that the heat of the high-temperature ejected substance can be quickly absorbed, and the ejected substance is cooled.

In some embodiments, the cooling device comprises a liquid cooling tube, the liquid cooling tube has a first end, a second end, and a cooling tube section connected between the first end and the second end, the cooling tube section is mounted in the second chamber, and the first end and the second end respectively pass through the second chamber. A cooling pipe is used to take away the heat of the ejected substance to cool the ejected substance, so that the temperature of the ejected substance is quickly reduced to below the ignition temperature.

In some embodiments, the battery further comprises a second pressure relief mechanism, the second pressure relief mechanism is mounted on a chamber wall of the second chamber, and the second pressure relief mechanism is configured to discharge the ejected substance in the second chamber to the outside. The second pressure relief mechanism discharges the ejected substance in the second chamber out of the housing, so that the inner cavity can be depressurized to ensure safety.

According to a second aspect of the present application, an electric device is provided, comprising the battery described above. During operation of the electric device, that is, during operation of the battery for charging and discharging, when the battery cell experiences thermal runaway, a high-temperature ejected substance generated by the battery cell is cooled by the cooling device, so that the ejected substance is cooled to a low temperature and then discharged. The temperature of the cooled ejected substance is relatively low, so that flammable and explosive harm caused by a high temperature is eliminated from the ejected substance discharged to the outside, thereby protecting safety of the life and property of users or other personnel.

### DESCRIPTION OF DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. Those of ordinary skill in the art can still derive other accompanying drawings from these accompanying drawings without creative efforts.
FIG. 1 is an exploded view of a battery according to some embodiments of the present application;
FIG. 2 is a sectional view of a battery according to some embodiments of the present application;
FIG. 3 is a sectional view taken along line A-A in FIG. 2.
FIG. 4 is a sectional view of a battery according to still some other embodiments of the present application;
FIG. 5 is a sectional view of a battery according to still some other embodiments of the present application;
FIG. 6 is a sectional view taken along line B-B in FIG. 5;
FIG. 7 is a sectional view of a battery according to yet some other embodiments of the present application; and
FIG. 8 is a sectional view of a battery according to some other embodiments of the present application.

In which, reference signs in the figures:
10. housing; 11. inner cavity; 111. first chamber; 112. second chamber; 12. second pressure relief mechanism; 13. cover plate; 14. assembly box;
20. battery cell; 21. first pressure relief mechanism;
30. first separator plate; 31. through hole;
41. liquid cooling plate; 42. second separator plate; 421. partitioned space; 422. flow channel; 44. liquid cooling tube; 441. first end; 442. second end; 443. cooling tube section; and
50. endothermic phase-change material.

### DESCRIPTION OF EMBODIMENTS

In order to make the objects, technical solutions and advantages of the present application clearer, the present application will be further described in detail below with reference to the drawings and embodiments. It should be understood that the specific embodiments described herein are only used to explain the present application and are not used to limit the present application.

It should be understood that, when a component is referred to as being "fixed on" or "disposed on" another component, it may be directly or indirectly on the another component. When a component is referred to as being "connected to" another component, it may be directly or indirectly connected to the another component. The orientation or positional relationship indicated by the terms such as "upper", "lower", "left", and "right" are based on the orientation or positional relationship shown in the drawings, only to facilitate the description, rather than to indicate or imply that the referred device or element must have a specific orientation, be constructed and operated in a specific orientation, and therefore cannot be understood as a limitation to the present application. A person of ordinary skill in the art can understand specific meanings of the terms based on specific situations. The terms "first" and "second" are only used for descriptive purposes, and should not be construed as indicating or implying relative importance or implicitly indicating a quantity of technical features indicated. The meaning of "a plurality of" is two or more, unless otherwise specifically defined.

To describe the technical solutions provided in the present application, the present application will be described in detail below with reference to the drawings and embodiments.

At present, new energy, that is, renewable energy, is becoming more and more important in the development of society, and application and popularization of the new energy are also developing at a high speed. The new energy includes but is not limited to solar energy, wind energy, geothermal energy, tidal energy, etc. The renewable energy is converted into electrical energy that is convenient to store and utilize, and is applied to various industries through electrical energy output. In order to store the electrical energy converted from the renewable energy, new energy batteries including, but not limited to, lithium batteries, nickel hydrogen batteries, lead-acid batteries, etc., are indispensable. The lithium batteries have more outstanding advantages than other types of batteries, and therefore, various enterprises, universities, and research institutes are vigorously conducting research and development on the lithium batteries. Hereinafter, the new energy batteries are collectively referred to as a battery.

With an increasing application and popularization rate of the battery, some technical defects of the battery have gradually emerged. Moreover, technical defects related to safe use of the battery need to be preferentially solved, thereby ensuring safety of using the battery and ensuring safety of the life and property of users.

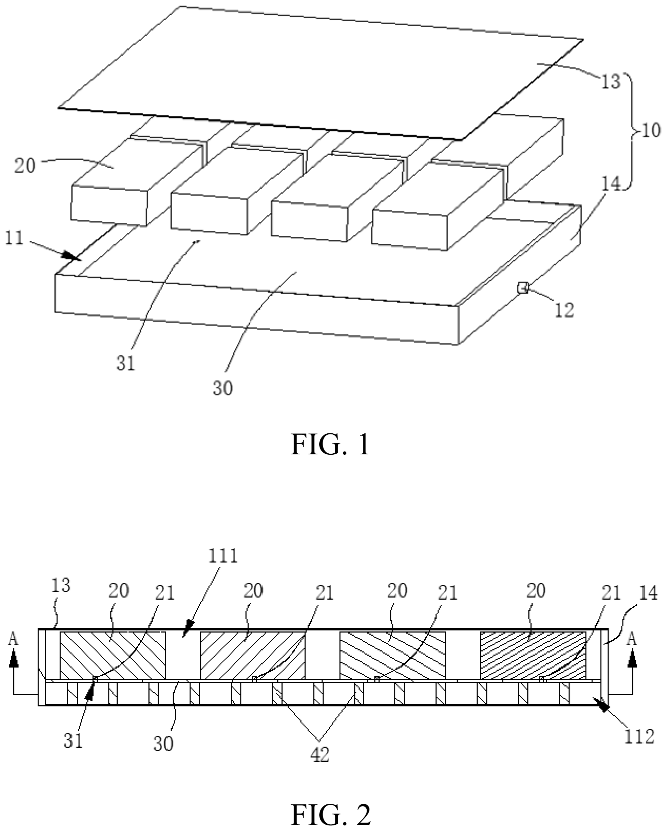

Generally, the battery includes a housing 10 and at least one battery cell 20, where most batteries are assembled with a plurality of battery cells 20 to meet a demand for large power. The following description is made by taking the case that the battery is assembled with a plurality of battery cells 20 as an example. The housing 10 includes an assembly box 14 and a cover plate 13, the cover plate 13 covers the assembly box 14 to form an inner cavity 11, and the plurality of battery cells 20 are collectively mounted in the inner cavity 11, as shown in FIG. 1. The plurality of battery cells 20 are electrically connected in parallel, in series, or in a series-parallel combination manner, to output electrical energy of a required output voltage and output current. The series-parallel combination manner means the following: Several battery cells 20 in the plurality of battery cells 20 are connected in series to form a battery cell module, a plurality of battery cell modules are formed in total, and then the plurality of battery cell modules are electrically connected in parallel, to output electrical energy of a required output voltage and output current. The parallel connection manner means that the plurality of battery cells 20 are connected in parallel to each other, to output electrical energy of a required output voltage and output current. The series connection manner means that the plurality of battery cells 20 are sequentially connected in series, to output electrical energy of a required output voltage and output current.

During use of the battery, after the battery is used for a period of time, aging inevitably occurs, or the temperature of the battery continuously increases during use, or the battery is affected by a sudden change in a use environment (for example, an abnormal use environment such as overcharging, overdischarging, extrusion, or collision) during use, and all of the above factors may cause a safety risk that the battery cell 20 of the battery is prone to experience thermal runaway. When the battery cell 20 experiences thermal runaway, a large amount of high-temperature solid particles and a large amount of combustible gas are generated in the battery cell 20, and the solid particles and combustible gas are mixed and ejected from a first pressure relief mechanism 21 to form an ejected substance. The ejected substance is in contact with the air, and the ejected substance will be ignited if exposed to a high temperature or an open flame, that is, the ejected substance has the risk of being ignited, which causes continuous thermal shock and radiation to the periphery of the battery, and great thermal harm is caused.

To reduce a degree of thermal harm generated when the battery cell 20 experiences thermal runaway, the battery provided in the embodiments of the present application uses a manner of first cooling the ejected substance and then discharging the ejected substance.

As shown in FIG. 1 and FIG. 2, a battery provided in an embodiment of the present application includes a battery cell 20, a housing 10, a first separator plate 30, and a cooling device. The housing 10 includes an assembly box 14 and a cover plate 13, the cover plate 13 covers the assembly box 14 to form an inner cavity 11, and the first separator plate 30 is mounted on the assembly box 14 to separate the inner cavity 11 into a first chamber 111 and a second chamber 112. The battery cell 20 is mounted in the first chamber 111, the battery cell 20 is provided with a first pressure relief mechanism 21, the first separator plate 30 is provided with a through hole 31, the first chamber 111 is communicated with the second chamber 112 through the through hole 31, the first pressure relief mechanism 21 is disposed exactly opposite to the through hole 31, and an ejected substance ejected from the battery cell 20 through the first pressure relief mechanism 21 flows into the second chamber 112 through the through hole 31. The cooling device is mounted in the second chamber 112, and the cooling device is configured to cool the ejected substance flowing into the second chamber 112. In this way, the second chamber 112 separated by the first separator plate 30 functions as an avoidance cavity of a battery in a related technology, that is, is configured to accommodate the ejected substance ejected from the battery cell 20. Moreover, after the ejected substance ejected from the battery cell 20 flows into the second chamber 112, the high-temperature ejected substance will exchange heat with the cooling device to be cooled, so that the cooled ejected substance can ensure that the temperature of the ejected substance is lower than an ignition temperature, and even if the ejected substance is discharged from the second chamber 112 to the outside to be in contact with the air, the ejected substance will not be ignited (the ejected substance is mixed with oxygen after being in contact with the air, and if the temperature of the ejected substance is greater than or equal to an ignition point, the ejected substance mixed with the oxygen will be ignited, and even an explosion will be caused in severe cases).

In the battery provided in this embodiment of the present application, the inner cavity 11 of the housing 10 is separated into the first chamber 111 and the second chamber 112 by using the first separator plate 30, the first chamber 111 is configured to mount battery cells 20 for assembly to form a key component part of the battery, and the second chamber 112 is formed as an avoidance cavity configured to accommodate the ejected substance ejected from the battery cell 20 when the battery experiences thermal runaway. Moreover, the cooling device is disposed in the second chamber 112, and when the ejected substance flows into the second chamber 112, the cooling device can exchange heat with the ejected substance, thereby cooling the ejected substance to make the temperature of the ejected substance lower than the ignition temperature. In this way, even if the ejected substance is discharged from the second chamber 112 to the outside to be in contact with the air, the ejected substance will not be ignited, thereby reducing continuous thermal impact and radiation generated to the periphery of the battery by the ejected substance generated when the battery experiences thermal runaway, and greatly reducing harm of the high-temperature ejected substance to the battery.

The first pressure relief mechanism 21 is assembled by using an explosion-proof valve. The explosion-proof valve is composed of a steel welded cylinder and an explosion-proof valve sheet. When the battery cell 20 experiences thermal runaway, and the high-temperature ejected substance generated in the battery cell 20 causes pressure in the battery cell 20 to be greater than specified pressure of the explosion-proof valve, the explosion-proof valve sheet is broken by itself, so that the ejected substance in the battery cell 20 is discharged and flows into the second chamber 112, and the inner cavity 11 can be depressurized to ensure safety.

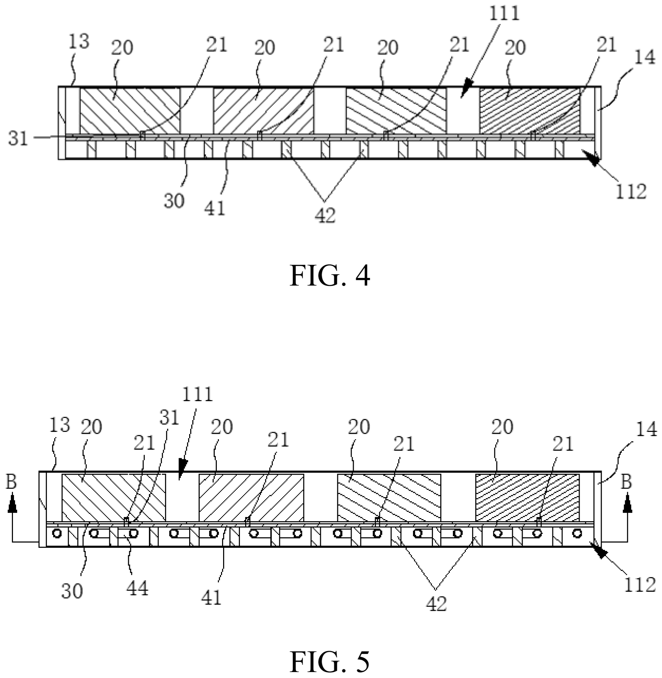

As shown in FIG. 4, in some embodiments of the present application, the cooling device includes a liquid cooling plate 41, and a cooling liquid flowing in the liquid cooling plate 41 is used to cool the high-temperature ejected substance generated when the battery cell 20 experiences thermal runaway. The liquid cooling plate 41 is mounted in the second chamber 112, and the liquid cooling plate 41 is attached to the first separator plate 30, so that the liquid cooling plate 41 avoids a sufficient space for accommodating the high-temperature ejected substance. When the battery cell 20 of the battery experiences thermal runaway, the high-temperature ejected substance generated by the battery cell 20 in thermal runaway is ejected from the first pressure relief mechanism 21 and flows into the second chamber 112 through the through hole 31, and then the ejected substance is in direct contact with the liquid cooling plate 41. In this way, the high-temperature ejected substance exchanges heat with the cooling liquid circulating in the liquid cooling plate 41 to cool the ejected substance, so that the temperature of the ejected substance is reduced to below the ignition temperature. Then, the ejected substance will not be ignited or exploded after being discharged from the second chamber 112, thereby ensuring safety of using the battery. In fact, during normal charging and discharging of the battery, the cooling liquid circulating in the liquid cooling plate 41 can cool normal working heat generated when the battery cell 20 works, thereby ensuring that each battery cell 20 is maintained within a suitable working temperature range, and ensuring normal working of the battery.

In some embodiments of the present application, the first separator plate 30 may be directly disposed as the liquid cooling plate 41, as shown in FIG. 2. To be specific, a flow channel for circulating the cooling liquid is disposed in the first separator plate 30, so that not only the first separator plate 30 has a function of separating the inner cavity 11 into the first chamber 111 and the second chamber 112, but also the first separator plate 30 has a cooling function of the liquid cooling plate 41.

Alternatively, in some other embodiments of the present application, the cooling device includes the liquid cooling plate 41, and the first separator plate 30 is directly disposed as the liquid cooling plate 41. In this way, when the high-temperature ejected substance flows into the second chamber 112, the cooling liquid circulating in the liquid cooling plate 41 and that circulating in the first separator plate 30 can be simultaneously used to take away the heat of the high-temperature ejected substance, so that the ejected substance can be quickly cooled.

In the disposing manner in this embodiment of the present application, the first separator plate 30 is mounted in the inner cavity 11, and in this case, the first separator plate 30 is only a metal plate, including but not limited to a copper plate, an aluminum plate, etc., the liquid cooling plate 41 is mounted in the second chamber 112, and a plate surface of the liquid cooling plate 41 is attached to the first separator plate 30.

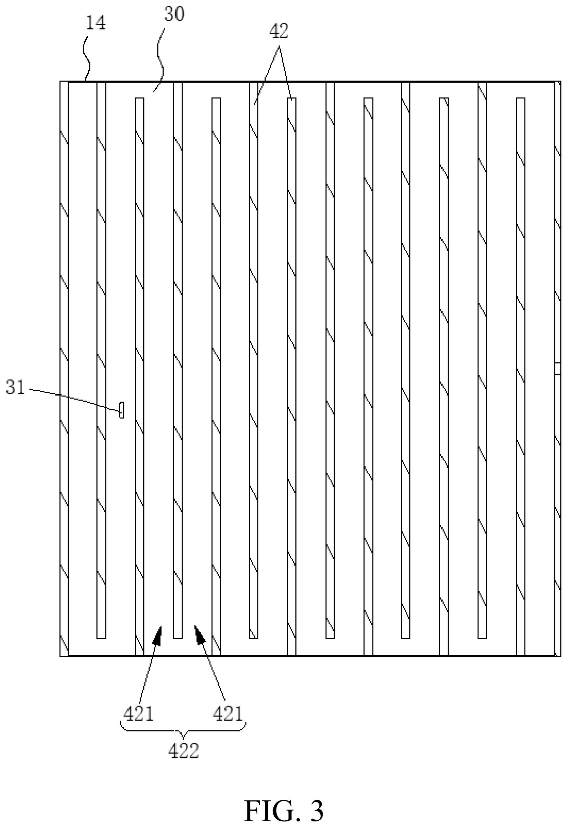

In order to enhance heat exchange efficiency of the liquid cooling plate 41 for cooling the high-temperature ejected substance, the cooling device further includes a plurality of second separator plates 42, as shown in FIG. 2 and FIG. 3. Each second separator plate 42 is mounted in the second chamber 112, and one end of each second separator plate 42 abuts against the liquid cooling plate 41. Specifically, each second separator plate 42 is fixedly connected to a plate surface that is of the liquid cooling plate 41 and that faces away from the first chamber 111, and in this case, the other end of each second separator plate 42 is spaced apart from an inner chamber wall of the second chamber 112. In this way, when the ejected substance flows into the second chamber 112, the high-temperature ejected substance is in contact with both the liquid cooling plate 41 and each second separator plate 42, and while the liquid cooling plate 41 directly exchanges heat with the ejected substance, each second separator plate 42 also absorbs the heat of the ejected substance, each second separator plate 42 transfers the absorbed heat to the liquid cooling plate 41, and then the cooling liquid circulating in the liquid cooling plate 41 takes away the heat absorbed by the liquid cooling plate 41, thereby implementing cooling. Therefore, the plurality of second separator plates 42 are used to assist the liquid cooling plate 41 in absorbing the heat of the ejected substance, thereby greatly improving efficiency of exchanging heat with the ejected substance by the liquid cooling plate 41, and more quickly cooling the ejected substance, so that the temperature of the ejected substance is quickly reduced to below the ignition temperature, thereby reducing thermal harm of the ejected substance to the battery.

In some other embodiments of the present application, each second separator plate 42 is fixedly connected to the inner chamber wall of the second chamber 112, and an end of each second separator plate 42 is spaced apart from the liquid cooling plate 41. In this case, when the high-temperature ejected substance flows into the second chamber 112, in one aspect, the cooling liquid circulating in the liquid cooling plate 41 takes away the heat of the ejected substance, and in another aspect, the ejected substance is in contact with each second separator plate 42, and then each second separator plate 42 absorbs the heat of the ejected substance and transfers the heat to a chamber wall of the second chamber 112, and then the housing 10 dissipates the heat to the air, thereby assisting the liquid cooling plate 41 in quickly cooling the high-temperature ejected substance.

In some embodiments of the present application, as shown in FIG. 4, one end of each second separator plate 42 abuts against the liquid cooling plate 41, the other end of each second separator plate 42 abuts against the inner chamber wall of the second chamber 112, two adjacent second separator plates 42 are spaced apart to form a partitioned space 421, and two adjacent partitioned spaces 421 are communicated with each other. In other words, the high-temperature ejected substance enters the partitioned space 421, and the ejected substance flows in each partitioned space 421, so that the high-temperature ejected substance is in more sufficient contact with the second separator plate 42, and the second separator plate 42 can absorb more heat of the ejected substance and then transfer the heat to the liquid cooling plate 41, and then the heat is taken away by the cooling liquid circulating in the liquid cooling plate 41, thereby improving efficiency of cooling the ejected substance.

In order to more sufficiently exchange heat with the high-temperature ejected substance and more sufficiently absorb the heat of the ejected substance, the plurality of partitioned spaces 421 are sequentially communicated head to tail to form a flow channel 422, so that the ejected substance are sequentially in contact with the second separator plates 42 in a pre-designed flow direction of the flow channel 422 to exchange heat. The high-temperature ejected substance flowing into the second chamber 112 will flow along the channel formed through communication of the partitioned spaces 421. During the flow of the ejected substance, the ejected substance is in contact and exchanges heat with the second separator plate 42, and the second separator plate 42 transfers the heat to the liquid cooling plate 41, and then the cooling liquid circulating in the liquid cooling plate 41 takes away the heat, thereby cooling the ejected substance. Since the plurality of second separator plates 42 separate the second chamber 112 to form the channel for the ejected substance to flow, the high-temperature ejected substance can be in sufficient contact with each second separator plate 42 in a process of flowing in each partitioned space 421, to more sufficiently perform heat exchange, so that the high-temperature ejected substance is more sufficiently cooled.

In the design manner of the battery in this embodiment of the present application, not only the liquid cooling plate 41 but also the second separator plate 42 are disposed in the second chamber 112 of the battery, two ends of the second separator plate 42 respectively abut against the liquid cooling plate 41 and the inner wall of the second chamber 112, two adjacent second separator plates 42 are spaced apart to form the partitioned space 421, and the plurality of partitioned spaces 421 are sequentially communicated head to tail to form the flow channel 422. In this embodiment of the present application, the liquid cooling plate 41 and the second separator plate 42 are an integrally formed metal member, and when the liquid cooling plate 41 is mounted in the inner cavity 11, an end that is of the second separator plate 42 and that is away from the liquid cooling plate 41 abuts against a cavity wall of the inner cavity 11. Then, the first separator plate 30 is mounted in the inner cavity 11, and a plate surface of the first separator plate 30 is attached to a plate surface of the second separator plate 42, so that the inner cavity 11 is separated by the first separator plate 30 to form the first chamber 111 and the second chamber 112.

In this embodiment of the present application, the second separator plate 42 is a plate made of a metal material. The second separator plate 42 includes but is not limited to being made of a metal material such as a copper material or a steel material. The metal material such as the copper material or the steel material has good heat-conducting performance, and can quickly exchange heat with the high-temperature ejected substance in contact with the metal material, thereby absorbing the heat and transferring the heat to the liquid cooling plate 41, so that the cooling liquid circulating in the liquid cooling plate 41 takes away the heat, and the ejected substance is quickly cooled.

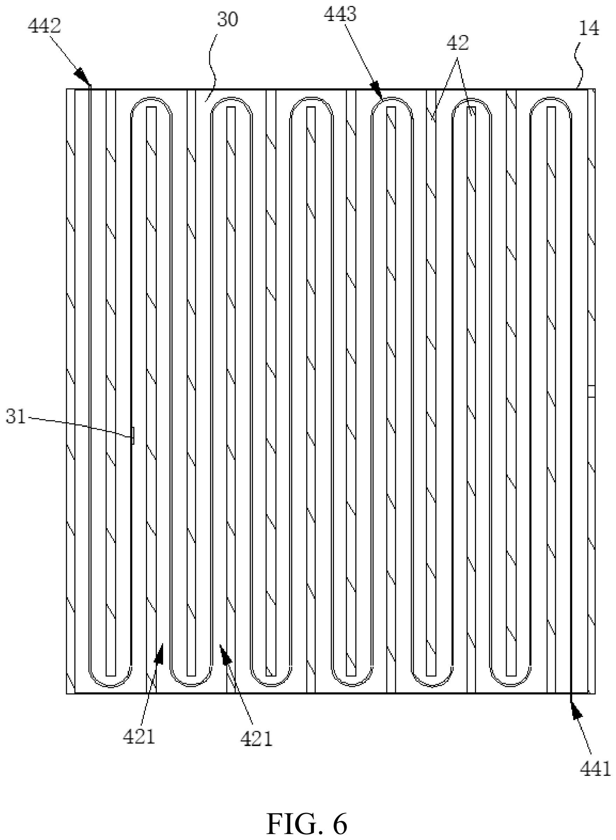

In some embodiments of the present application, as shown in FIG. 5 and FIG. 6, the cooling device further includes a liquid cooling tube 44, and the liquid cooling tube 44 is used to enhance efficiency of cooling the high-temperature ejected substance. Specifically, the liquid cooling tube 44 has a first end 441, a second end 442, and a cooling tube section 443 connected between the first end 441 and the second end 442, the cooling tube section 443 is disposed to extend along a flow path of the flow channel 422, and the first end 441 and the second end 442 respectively pass through the chamber wall of the second chamber 112. In other words, one of the first end 441 and the second end 442 is an inlet end for the cooling liquid, and the other of the first end 441 and the second end 442 is an outlet end for the cooling liquid. The cooling liquid flows through the cooling tube section 443 to exchange heat with the high-temperature ejected substance to take away the heat of the ejected substance, to cool the temperature of the ejected substance, so that the temperature of the ejected substance is quickly reduced to below the ignition temperature. When the high-temperature ejected substance flows into the second chamber 112 and the ejected substance flows along the flow channel 422 formed through communication of the partitioned spaces 421, the high-temperature ejected substance is in contact with the cooling tube section 443, and in this case, the high-temperature ejected substance exchanges heat with the cooling tube section 443, and then the cooling liquid circulating in the liquid cooling tube 44 takes away the heat, so that the ejected substance is quickly cooled.

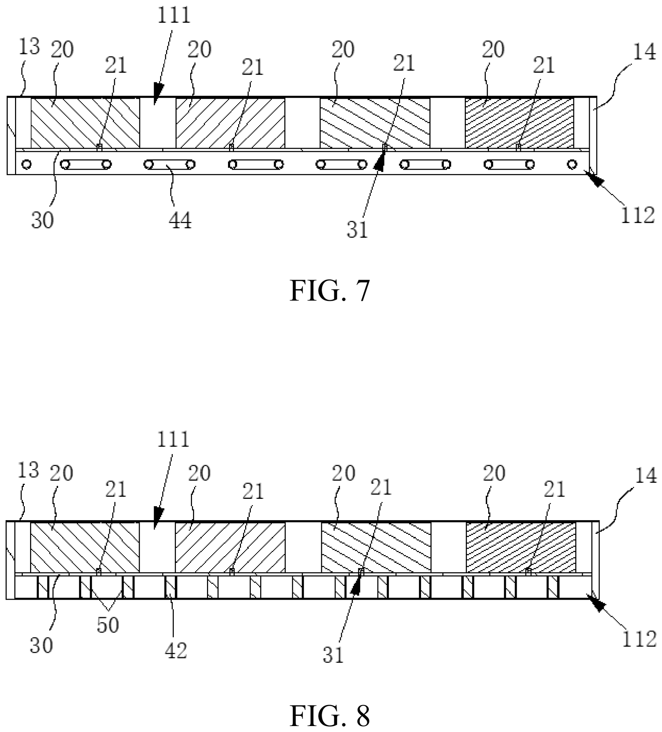

In some embodiments of the present application, as shown in FIG. 7, the cooling device includes a liquid cooling tube 44, and the liquid cooling tube 44 is used to enhance efficiency of cooling the high-temperature ejected substance. Specifically, the liquid cooling tube 44 has a first end 441, a second end 442 and a cooling tube section 443 connected between the first end 441 and the second end 442, the cooling tube section 443 is mounted in the second chamber 112, and the first end 441 and the second end 442 respectively pass through the chamber wall of the second chamber 112. In other words, the second separator plate 42 is not disposed in the second chamber 112 of the housing 10 of the battery, and the liquid cooling tube 44 is directly laid in the second chamber 112. When the battery cell 20 experiences thermal runaway and the high-temperature ejected substance flows into the second chamber 112, the high-temperature ejected substance is in contact with the cooling tube section 443 of the liquid cooling tube 44, the high-temperature ejected substance exchanges heat with the cooling tube section 443, and then the cooling liquid circulating in the liquid cooling tube 44 takes away the heat, so that the ejected substance is quickly cooled.

In some embodiments of the present application, as shown in FIG. 8, the cooling device further includes an endothermic phase-change material 50, and the endothermic phase-change material 50 is disposed on a side wall of the second separator plate 42. When the high-temperature ejected substance flows into the second chamber 112 and the ejected substance flows along the flow channel 422 formed through communication of the partitioned spaces 421, the high-temperature ejected substance is first in contact with the endothermic phase-change material 50, and in this case, the endothermic phase-change material 50 exchanges heat with the high-temperature ejected substance, that is, the endothermic phase-change material 50 absorbs the heat of the ejected substance, and then the phase of the endothermic phase-change material 50 changes, thereby cooling the ejected substance. In fact, the endothermic phase-change material 50 changes from a solid phase to a liquid phase when absorbing heat, and conversely, the endothermic phase-change material changes from a liquid phase to a solid phase when releasing heat. Efficiency of heat exchange between the endothermic phase-change material 50 and the ejected substance in contact with each other is higher than efficiency of heat exchange between the ejected substance and the second separator plate 42 in contact with each other, so that the heat of the high-temperature ejected substance can be quickly absorbed, and the ejected substance is cooled. When the endothermic phase-change material 50 absorbs the heat of the ejected substance and liquefies, the second separator plate 42 is exposed, and the second separator plate 42 continues to be in contact with the ejected substance for heat exchange, and the heat transferred by the second separator plate 42 is taken away by the cooling liquid circulating in the liquid cooling plate 41. Moreover, the heat absorbed by the endothermic phase-change material 50 will be transferred to the housing 10 and the liquid cooling plate 41, the heat transferred to the housing 10 will be air-cooled and dissipated into the air, and the heat transferred to the liquid cooling plate 41 will be taken away by the cooling liquid circulating in the liquid cooling plate 41, so that the high-temperature ejected substance in the second chamber 112 is quickly cooled.

In some embodiments of the present application, the cooling device includes an endothermic phase-change material 50, and the endothermic phase-change material 50 is disposed in the second chamber 112. In other words, the second separator plate 42 is not disposed in the second chamber 112 of the housing 10 of the battery, and the endothermic phase-change material 50 is directly laid on the chamber wall of the second chamber 112. When the battery cell 20 experiences thermal runaway and the high-temperature ejected substance flows into the second chamber 112, the high-temperature ejected substance is in contact with the endothermic phase-change material 50, and the high-temperature ejected substance exchanges heat with the endothermic phase-change material 50, that is, the endothermic phase-change material 50 absorbs the heat of the ejected substance, and then the phase of the endothermic phase-change material 50 changes, thereby cooling the ejected substance.

In the design manner of the battery in this embodiment of the present application, the battery is not only provided with the liquid cooling tube 44, but also provided with the endothermic phase-change material 50 on each second separator plate 42. In this way, the liquid cooling tube 44 and the endothermic phase-change material 50 simultaneously exchange heat with the high-temperature ejected substance, so that the high-temperature ejected substance can be cooled more quickly, and the temperature of the ejected substance can be quickly reduced to below the ignition temperature.

In some embodiments of the present application, the cooling device further includes a liquid pump (not shown) and a pressure sensor (not shown), the liquid pump is configured to pump a cooling liquid to the liquid cooling plate 41, and the pressure sensor is configured to monitor a pressure value in the second chamber 112. Specifically, the pressure sensor is mounted in the second chamber 112, the pressure sensor is electrically connected to the liquid pump, and the liquid pump increases and adjusts the flow rate and the flow velocity of the delivered cooling liquid based on a pressure increase in the second chamber 112 detected by the pressure sensor. When the battery cell 20 experiences thermal runaway, the high-temperature ejected substance generated in the battery cell 20 is ejected from the first pressure relief mechanism 21 and flows into the second chamber 112 through the through hole 31 on the first separator plate 30, so that pressure in the second chamber 112 increases quickly. Therefore, the pressure sensor detects that the pressure in the second chamber 112 increases, then the pressure sensor sends a monitoring signal indicating that the pressure in the second chamber 112 increases to the liquid pump, and the liquid pump increases the flow rate and the flow velocity of the cooling liquid delivered to the liquid cooling plate 41 based on the monitoring signal sent by the pressure sensor, thereby improving efficiency of taking away heat transferred to the liquid cooling plate 41, so that the high-temperature ejected substance in the second chamber 112 can be quickly cooled.

In some other embodiments of the present application, the cooling device further includes a liquid pump (not shown) and a temperature sensor (not shown), the liquid pump is configured to pump a cooling liquid to the liquid cooling plate 41, and the temperature sensor is configured to monitor a pressure value in the second chamber 112. Specifically, the temperature sensor is mounted in the second chamber 112, the temperature sensor is electrically connected to the liquid pump, and the liquid pump increases and adjusts the flow rate and the flow velocity of the delivered cooling liquid based on a temperature increase in the second chamber 112 detected by the temperature sensor. When the battery cell 20 experiences thermal runaway, the high-temperature ejected substance generated in the battery cell 20 is ejected from the first pressure relief mechanism 21 and flows into the second chamber 112 through the through hole 31 on the first separator plate 30, so that the temperature in the second chamber 112 increases quickly. Therefore, the temperature sensor detects that the temperature in the second chamber 112 increases, then the temperature sensor sends a monitoring signal indicating that the temperature in the second chamber 112 increases to the liquid pump, and the liquid pump increases the flow rate and the flow velocity of the cooling liquid delivered to the liquid cooling plate 41 based on the monitoring signal sent by the temperature sensor, thereby improving efficiency of taking away heat transferred to the liquid cooling plate 41, so that the high-temperature ejected substance in the second chamber 112 can be quickly cooled.

In some other embodiments of the present application, the cooling device further includes a liquid pump (not shown), the liquid pump is configured to pump a cooling liquid to the liquid cooling plate 41, both a pressure sensor and a temperature sensor are mounted in the second chamber 112, and both the pressure sensor and the temperature sensor are electrically connected to the liquid pump. When the high-temperature ejected substance flows into the second chamber 112, the pressure sensor and the temperature sensor respectively detect a pressure increase and a temperature increase in the second chamber 112, and then both the pressure sensor and the temperature sensor send monitoring signals to the liquid pump, and the liquid pump increases the flow rate and the flow velocity of the cooling liquid delivered to the liquid cooling plate 41, regardless of whether the liquid pump receives a pressure signal or a temperature signal, or the liquid pump receives both the pressure signal and the temperature, thereby improving efficiency of taking away heat transferred to the liquid cooling plate 41, so that the high-temperature ejected substance in the second chamber 112 can be quickly cooled.

In this embodiment of the present application, both the pressure sensor and the temperature sensor are mounted in the second chamber 112 of the battery.

In one aspect, the cooling device of the battery may be provided with only the liquid cooling plate 41, the liquid pump, the pressure sensor, and the temperature sensor, and the second chamber 112 only functions as an avoidance cavity that is of a battery in a related technology and that is configured to accommodate an ejected substance. When the battery cell 20 experiences thermal runaway, the flow rate and the flow velocity of the cooling liquid circulating in the liquid cooling plate 41 are increased to improve efficiency of taking away heat by the cooling liquid circulating in the liquid cooling plate 41, thereby achieving a purpose of quickly cooling the high-temperature ejected substance.

In another aspect, the cooling device of the battery is not only provided with the liquid cooling plate 41, the liquid pump, the pressure sensor, and the temperature sensor, but also provided with the second separator plate 42, the liquid cooling tube 44, and the endothermic phase-change material 50. In this way, when the battery cell 20 experiences thermal runaway and the high-temperature ejected substance flows into the second chamber 112, not only a pressure increase in the second chamber 112 can be detected by using the pressure sensor, but also a temperature increase in the second chamber 112 can be detected by using the temperature sensor, so that the liquid pump increases the flow rate and the flow velocity of the cooling liquid circulating in the liquid cooling plate 41 to improve efficiency of taking away heat by the cooling liquid circulating in the liquid cooling plate 41. Moreover, the heat absorbed by the endothermic phase-change material 50 will be transferred to the housing 10 and the liquid cooling plate 41, the heat transferred to the housing 10 will be air-cooled and dissipated into the air, and the heat transferred to the liquid cooling plate 41 will be taken away by the cooling liquid circulating in the liquid cooling plate 41. In addition, when the endothermic phase-change material 50 absorbs the heat of the ejected substance and liquefies, the second separator plate 42 is exposed, and the second separator plate 42 continues to be in contact with the ejected substance for heat exchange, and the heat transferred by the second separator plate 42 is taken away by the cooling liquid circulating in the liquid cooling plate 41.

In the design manner of the battery in this embodiment of the present application, the cooling device of the battery is not only provided with the liquid cooling plate 41, the liquid pump, the temperature sensor, and the pressure sensor, but also provided with the second separator plate 42, the liquid cooling tube 44, and the endothermic phase-change material 50.

In this embodiment of the present application, as shown in FIG. 1, the battery further includes a second pressure relief mechanism 12, the second pressure relief mechanism 12 is mounted on the chamber wall of the second chamber 112, and the second pressure relief mechanism 12 is configured to discharge, to an external environment, the ejected substance ejected by the battery cell 20 that flows into the second chamber 112. After the ejected substance flowing into the second chamber 112 is cooled to a temperature below the ignition temperature, the ejected substance can be discharged from the second pressure relief mechanism 12, and the discharged ejected substance will not be ignited or exploded even if mixed with oxygen in the air due to the temperature lower than the ignition temperature, thereby reducing continuous thermal shock and radiation generated to the periphery of the battery by the ejected substance generated when the battery experiences thermal runaway, and greatly reducing harm of the high-temperature ejected substance to the battery.

The second pressure relief mechanism 12 is assembled by using an explosion-proof valve. The explosion-proof valve is composed of a steel welded cylinder and an explosion-proof valve sheet. When the high-temperature ejected substance generated by the battery cell 20 during thermal runaway flows into the second chamber 112, so that pressure in the second chamber 112 is greater than specified pressure of the explosion-proof valve, the explosion-proof valve sheet is broken by itself, thereby discharging the ejected substance in the second chamber 112 out of the housing 10, so that the inner cavity 11 can be depressurized to ensure safety.

According to another aspect of embodiments of the present application, an electric device is provided. Specifically, the electric device includes the battery described above, and the battery provides electrical energy for normal working of the electric device. The electric device includes but is not limited to a new energy electric vehicle. Alternatively, the electric device may be a relatively large energy storage device, and the energy storage device uses the battery provided above to store electrical energy.

During operation of the electric device, that is, during operation of the battery for charging and discharging, when the battery cell 20 experiences thermal runaway, a high-temperature ejected substance generated by the battery cell 20 is cooled by the cooling device, so that the ejected substance is cooled to a low temperature and then discharged from the second pressure relief mechanism 12. The temperature of the cooled ejected substance is relatively low, so that flammable and explosive harm caused by a high temperature is eliminated from the ejected substance discharged to the outside, thereby protecting safety of the life and property of users or other personnel.

The foregoing descriptions are merely optionally embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the claims of the present application.

## Claims

1. A battery, **characterized by** comprising:
a battery cell provided with a first pressure relief mechanism;
a housing provided with an inner cavity;
a first separator plate mounted in the housing to separate the inner cavity into a first chamber and a second chamber, wherein the battery cell is mounted in the first chamber, the first separator plate is provided with a through hole, the first chamber is communicated with the second chamber through the through hole, and the first pressure relief mechanism is disposed opposite to the through hole to allow an ejected substance ejected from the battery cell to flow into the second chamber; and
a cooling device mounted in the second chamber, wherein the cooling device is configured to cool the ejected substance flowing into the second chamber.

2. The battery according to claim 1, wherein
the cooling device comprises a liquid cooling plate, and the liquid cooling plate is mounted in the second chamber;
and/or the first separator plate is disposed as the liquid cooling plate.

3. The battery according to claim 2, wherein
the cooling device further comprises a plurality of second separator plates, each of the second separator plates is mounted in the second chamber, two adjacent second separator plates are spaced apart to form a partitioned space, and two adjacent partitioned spaces are communicated with each other.

4. The battery according to claim 3, wherein
one end of each of the second separator plates abuts against the liquid cooling plate, and/or the other end of each of the second separator plates abuts against an inner wall of the housing.

5. The battery according to claim 3, wherein
a plurality of partitioned spaces are sequentially communicated head to tail to form a flow channel.

6. The battery according to claim 5, wherein
the cooling device further comprises a liquid cooling tube, the liquid cooling tube has a first end, a second end, and a cooling tube section connected between the first end and the second end, the cooling tube section is disposed to extend along a flow path of the flow channel, and the first end and the second end respectively pass through the second chamber.

7. The battery according to any one of claims 3 to 6, wherein
the second separator plate is a plate made of metal.

8. The battery according to any one of claims 3 to 6, wherein
the cooling device further comprises an endothermic phase-change material, and the endothermic phase-change material is disposed on the second separator plate.

9. The battery according to any one of claims 2 to 6, wherein
the cooling device further comprises a liquid pump, the liquid pump is configured to pump a cooling liquid to the liquid cooling plate, a pressure sensor and/or a temperature sensor are/is mounted in the second chamber, and the pressure sensor and/or the temperature sensor are/is electrically connected to the liquid pump.

10. The battery according to claim 1 or 2, wherein
the cooling device comprises an endothermic phase-change material, and the endothermic phase-change material is disposed in the second chamber.

11. The battery according to claim 1 or 2, wherein
the cooling device comprises a liquid cooling tube, the liquid cooling tube has a first end, a second end, and a cooling tube section connected between the first end and the second end, the cooling tube section is mounted in the second chamber, and the first end and the second end respectively pass through the second chamber.

12. The battery according to claim 1, wherein
the battery further comprises a second pressure relief mechanism, the second pressure relief mechanism is mounted on a chamber wall of the second chamber, and the second pressure relief mechanism is configured to discharge the ejected substance in the second chamber to the outside.

13. An electric device, **characterized by** comprising the battery according to any one of claims 1 to 12.
